# EUROPEAN PATENT APPLICATION

(11) **EP 2 090 976 A2**
(43) Date of publication of application: **19.08.2009**
(21) Application number: 08253715.0
(22) Date of filing: 13.11.2008
(51) Int. Cl.: G06F 3/06

(54) **Method of substituting process in storage system**

(30) Priority: 18.02.2008 JP 2008035914
(71) Applicant: Hitachi, Ltd., Chiyoda-ku Tokyo (JP)
(72) Inventor: Ishii, Yohsuke, Tokyo 100-8220 (JP)
(74) Representative: Moore, Graeme Patrick

(57) **Abstract**

There is provided a computer system comprising: a storage system for storing data; and a management server coupled to the storage system. The storage system comprises a first interface, a first processor and a first memory. The management server comprises a second interface, a second processor and a second memory. In the case of which a first storage system stops receiving a process request, the management server selects a second storage system which receives a process request directed to the first storage system in place of the first storage system to be stopped. The second storage system instructs the first storage system to change an identifier of the first storage system, and receives a process request directed to the first storage system by assigning the identifier of the first storage system before the change to the second storage system.

## Description

The present application claims priority from Japanese patent applications JP 2008-35914 filed on February 18, 2008, the content of which are hereby incorporated by reference into this application.

This invention relates to a maintenance and management technology for a computer system.

Recently, with the increase in performance and decrease in price of the computer systems, the computer systems have come to be used in various business sectors and applications. Accordingly, data on conventional paper medium and the like have become computerized, and have come to be electronically stored in the computer systems.

Further, an even advanced form of use where multiple computer systems are coupled via a network has rapidly been increasing. Using the network enables distributed management and distributed processing of data, and provides usability, reliability, and performance, which are hardly realized by only a single computer system. In this form of use where multiple computer systems are coupled, provision of a technology for efficiently managing data has become increasingly important in terms of an increase in convenience for users of the computer systems.

Moreover, a data storage technology for replicating data, and then distributing and storing the redundant replicas on multiple systems has recently become available. This technology can increase reliability against loss of data by storing redundant data in other systems even when some of devices in a computer system cannot be used due to failure, maintenance, or the like. Further, even if some of the devices are under a maintenance and management operation, continued access to the stored data can be guaranteed, resulting in an increase in availability of the data access. With this technology, for example, by building a computer system where multiple inexpensive devices are coupled via a network, and by managing data stored in a redundant and distributed form in this system, it is possible to realize high reliability and usability at the same level as those provided by a case where data is stored using a highly reliable special device.

Conventionally, as for the method of managing data stored in the redundant and distributed form in a computer system including multiple devices, Japanese Patent Application Laid-open No. 2002-14861 discloses a technology where consistency assurance control is added to a file management system including multiple file servers, thereby providing a file replication system. According to the technology disclosed in JP 2002-14861 A1, a file registered to an arbitrary server in the system is dynamically replicated to multiple other servers in this system. Since loss of a stored file of interest can be prevented by the multiple replicas, the reliability can be increased.

On this occasion, two types of methods are conceivable for replicating data. One of them is a synchronous method: replicas of data are produced in synchronism with the registration or update of the data. The other is an asynchronous method: replicas of data are produced asynchronously with the registration or update of the data. Though the synchronous method has the merit that replicas are simultaneously produced upon the registration or update of data, and thus replicas are surely produced, the synchronous method has the demerit that an overhead on the data registration and update is large. On the other hand, though the asynchronous method has the merit that the overhead on the data registration and update can be small, there has been a time lag until replicas are produced.

However, according to the technology disclosed JP 2002-14861 A1, if data is to be replicated to a system under maintenance and management in the computer system, there arises a problem that the overhead for the data replication increases. For example, if a system requesting for data replication, which is a request source system, does not receive a response to the request after a predetermined timeout period has expired, the request source system retries the request. If the request still fails after a predetermined number of the retries, the request source system searches again for another system, and requests the searched system for the replication. Moreover, in a distributed environment where centralized management is not provided, when an operation administrator maintains and manages an arbitrary device, the operation administrator conventionally does not notify the other devices in the system that the subject device is under the maintenance and management operation, and thus cannot receive a data replication request. As a result, even if a device receiving a request, which is a request destination device, is under the maintenance and management operation, a system requesting for data replication, which is a request source system, waits for the predetermined period, and retries the request a predetermined number of times. As a result, a useless overhead is generated in the request source system.

The above-described problem in the data replication process among the devices in the system is caused by issuing a replication request without recognizing the state of a device receiving this replication request. In the conventional method, if there is no response in a predetermined wait time after a request of replication, the request for the replication is sent to another device, and generation of a more or less overhead is thus permitted. However, it is expected that the quantity and the size of data stored in the system will increase in the future, and the frequency of the request for data replication and the processing load thereof in the system increase accordingly. Moreover, when a system constructed by a large number of devices, such as hundreds and thousands of devices, is built, there arises a high possibility that some of these devices are under a maintenance operation for recovery from failures.

Moreover, the above-described problem also occurs as an overhead caused by waiting for a response even in processes other than data replication.

It is therefore a preferred aim of this invention, in a system including multiple devices, to restrain a processing load on the entire system, which is caused by waiting for a response from a device out of operation, from increasing.

A representative aspect of this invention is as follows. That is, there is provided a computer system comprising: a storage system for storing data; and a management server coupled to the storage system. The storage system may comprise a first interface coupled to the management server, a first processor coupled to the first interface, and a first memory coupled to the first processor. The management server may comprise a second interface coupled to the storage system, a second processor coupled to the second interface, and a second memory coupled to the second processor. In the case of which a first storage system stops receiving a process request, the management server may select a second storage system which receives a process request directed to the first storage system in place of the first storage system to be stopped. The second storage system may instruct the first storage system to change an identifier of the first storage system, and may receive a process request directed to the first storage system by assigning the identifier of the first storage system before the change to the second storage system.

According to an aspect of this invention, it is possible to restrain the overhead due to waiting for a response from increasing by causing a process directed to a device on which a maintenance operation is carried out to be received by another device.

### BRIEF DESCRIPTION OF THE DRAWINGS

The present invention can be appreciated by the description which follows in conjunction with the following figures, wherein:
FIG. 1 is a block diagram showing an example of a configuration of a computer system in accordance with a first embodiment of this invention;
FIG. 2 is a block diagram showing an example of a configuration of the storage node in accordance with the first embodiment of this invention;
FIG. 3 is a block diagram showing an example of a configuration of a host computer in accordance with the first embodiment of this invention;
FIG. 4 is a block diagram showing an example of a configuration of a management server in accordance with the first embodiment of this invention;
FIG. 5 is a diagram showing an example of the substitution address information management table managed by the storage node in accordance with the first embodiment of this invention;
FIG. 6 is a diagram showing an example of the temporarily stored request management table managed by the storage node in accordance with the first embodiment of this invention;
FIG. 7 is a diagram showing an example of the storage substitution correspondence management table managed by the management server in accordance with the first embodiment of this invention;
FIG. 8 is a sequence diagram showing a flow of a series of steps for substituting a storage node under a maintenance operation in reception of requested processes in accordance with the first embodiment of this invention;
FIG. 9 is a flowchart showing steps for instructing by the management server to the storage system to start substitution in accordance with the first embodiment of this invention;
FIG. 10 is a flowchart showing steps of the reception substitution process at a substitution destination storage node in accordance with the first embodiment of this invention;
FIG. 11 is a flowchart showing steps for instructing by the management server to the storage system to finish the substitution in accordance with the first embodiment of this invention;
FIG. 12 is a diagram showing an example of the substitution address management table managed by the storage node in accordance with a second embodiment of this invention;
FIG. 13 is a flowchart showing steps for instructing by the management server to the storage system to start the substitution in accordance with the second embodiment of this invention;
FIG. 14 is a flowchart showing steps for instructing by the management server to the storage system to finish the substitution in accordance with the second embodiment of this invention;
FIG. 15 is a block diagram showing an example of a configuration of the computer system in accordance with a third embodiment of this invention;
FIG. 16 is a flowchart showing steps for instructing by the management server to the storage system to start the substitution in accordance with the third embodiment of this invention; and
FIG. 17 is a flowchart showing steps for instructing by the management server to the storage system to finish the substitution in accordance with the third embodiment of this invention.

A description will now be given of embodiments of this invention with reference to drawings.

### [First Embodiment]

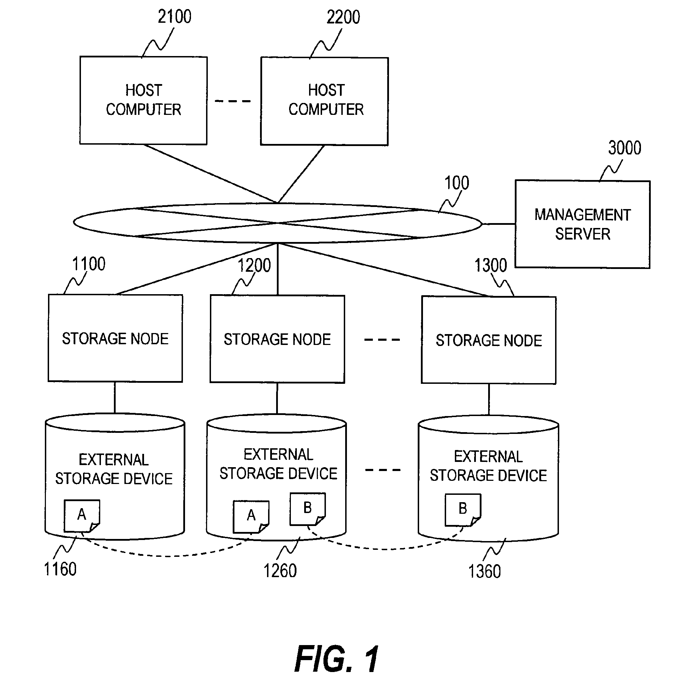

FIG. 1 is a block diagram showing an example of a configuration of a computer system according to a first embodiment of this invention.

The computer system according to the first embodiment of this invention includes storage nodes 1100, 1200, and 1300, host computers 2100 and 2200, and a management server 3000. The storage nodes 1100, 1200, and 1300, the host computers 2100 and 2200, and the management server 3000 are coupled with each other via a network 100.

The storage nodes 1100, 1200, and 1300 are server devices for providing a data storage function, and provide one storage system constituted by these multiple storage nodes. The storage node 1100 is coupled to an external storage device 1160 for storing data to be managed. The storage node 1100 manages the data stored in the external storage device 1160. Similarly, the storage node 1200 is coupled to an external storage device 1260, and the storage node 1300 is coupled to an external storage device 1360. It should be noted that the number of the storage nodes constituting the storage system may be arbitrary and variable.

Data to be stored in the storage system is replicated and stored in a redundant and distributed form in the storage system. For example, data A is replicated and stored at two locations on the external storage devices 1160 and 1260, and data B is replicated and stored at two locations on the external storage devices 1260 and 1360. Replicated data may be stored at arbitrary locations in the storage system, and the stored location of a replica may changed to a different storage node after replication. Further, the number of replications of data in the storage system is arbitrary, and the number may be fixed, or may be specified arbitrarily for respective data.

The host computers 2100 and 2200 are clients which use the storage system constituted by the storage nodes 1100, 1200, and 1300 and the like, thereby storing data, and using the stored data. The host computer can use the storage system by an access to an arbitrary storage node. Therefore, each of the storage nodes should understand the locations of all the data stored in the storage system, or should identify the data storage location by issuing queries inside the system when the storage node receives an access request. It should be noted that the number of the host computers coupled to the computer system may be arbitrary.

The management server 3000 provides functions for managing the storage node group and the external storage device group constituting the storage system. It is sufficient for the storage system to include at least one management server 3000, and multiple management servers 3000 may be used. Moreover, the host computer or the storage node may have the functions of the management server.

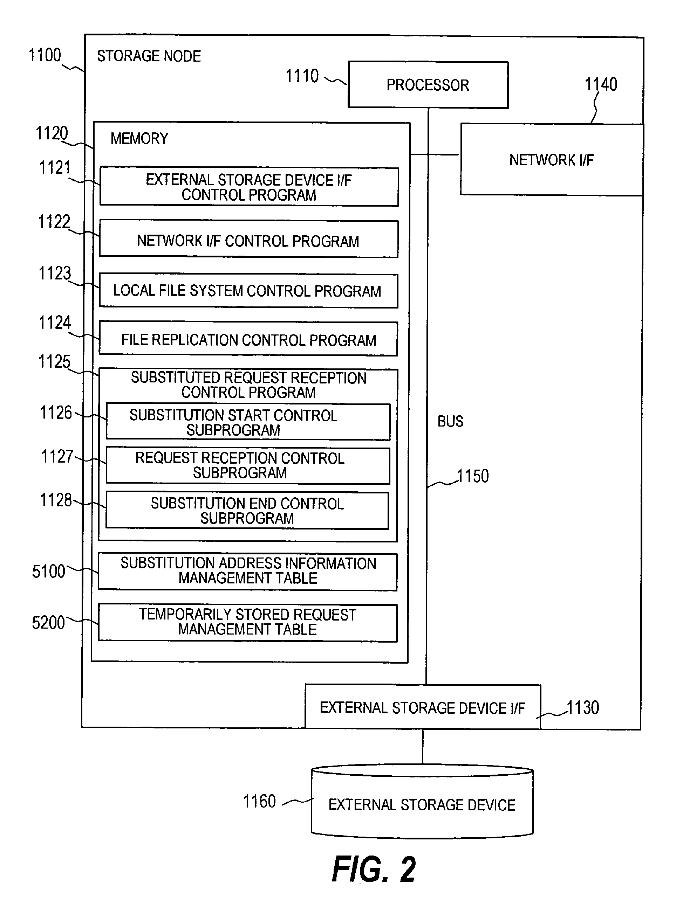

FIG. 2 is a block diagram showing an example of a configuration of the storage node 1100 according to the first embodiment of this invention.

The storage node 1100 includes a processor 1110, a memory 1120, an external storage device I/F 1130, and a network I/F 1140. In the storage node 1100, the processor 1110, the memory 1120, the external storage device I/F 1130, and the network I/F 1140 are coupled with each other by a bus 1150.

The processor 1110 executes programs stored in the memory 1120. The memory 1120 temporarily store the programs executed by the processor 1110, and the data required for the execution of these programs. The external storage device I/F 1130 is coupled to the external storage device 1160. The network I/F 1140 is coupled to other devices coupled via the network 100.

The memory 1120 stores an external storage device I/F control program 1121, a network I/F control program 1122, a local file system control program 1123, a file replication control program 1124, a substituted request reception control program 1125, a substitution address information management table 5100, and a temporarily stored request management table 5200.

The external storage device I/F control program 1121 controls the external storage device I/F 1130. The network I/F control program 1122 controls the network I/F 1140. The local file system control program 1123 controls a file system used for managing data on this storage node.

The file replication control program 1124 replicates data stored on this storage node, distributes the replicas to other storage nodes, and thus redundantly stores the replicas therein. The substituted request reception control program 1125 receives a request, which is directed to another storage node in this storage system, on the own storage node, which is substituting this other storage node.

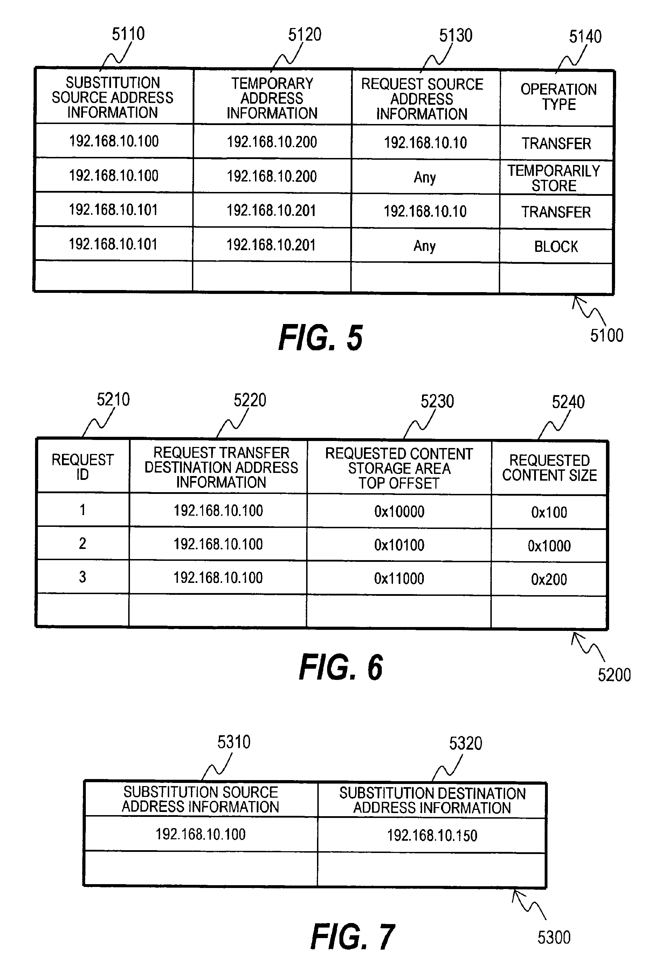

The substitution address information management table 5100 stores information for substituting a device undergoing a maintenance operation, and receiving requests directed thereto. The substitution address information management table 5100 will later be described with reference to FIG. 5. The temporarily stored request management table 5200 stores information on processes which a substitution source storage node is requested to carry out. A description will later be given of the temporarily stored request management table 5200 with reference to FIG. 6. The substitution address information management table 5100 and the temporarily stored request management table 5200 are used to execute the substituted request reception control program 1125.

The substituted request reception control program 1125 includes a substitution start control subprogram 1126, a request reception control subprogram 1127, and a substitution end control subprogram 1128.

When the substitution start control subprogram 1126 receives a substitution start request from the management server 3000, the substitution start control subprogram 1126 carries out processes such as taking over a node identifier, thereby causing the own storage node to serve as a substitute of a specified storage node.

The request reception control subprogram 1127, after the start of the substitution of a storage node, receives a request directed to the substitution source storage node, and carries out required processes. Specifically, these processes include a process of temporarily storing a requested content, and a process of transferring the request to the substitution source node. The temporary storage implies, upon reception of a request for replication of data from another storage node, temporary replication and storage of the data.

When the substitution end control subprogram 1128 receives a substitution end request from the management server 3000, the substitution end control subprogram 1128 carries out a process to finish substitution of a substitution source storage node for processes, which the substitution source storage node is requested to carry out. Specifically, the substitution end control subprogram 1128 carries out a process of recovering an identifier of a substitution source storage node, which has been managed on the own storage node, to the substitution source storage node, and a process of transferring requested contents, which are temporarily stored while the substitution has been carried out, to the substitution source storage node, and causing the substitution source storage node to carry out the requested contents.

The other storage nodes 1200 and 1300 have the same configuration, and hence description thereof is omitted.

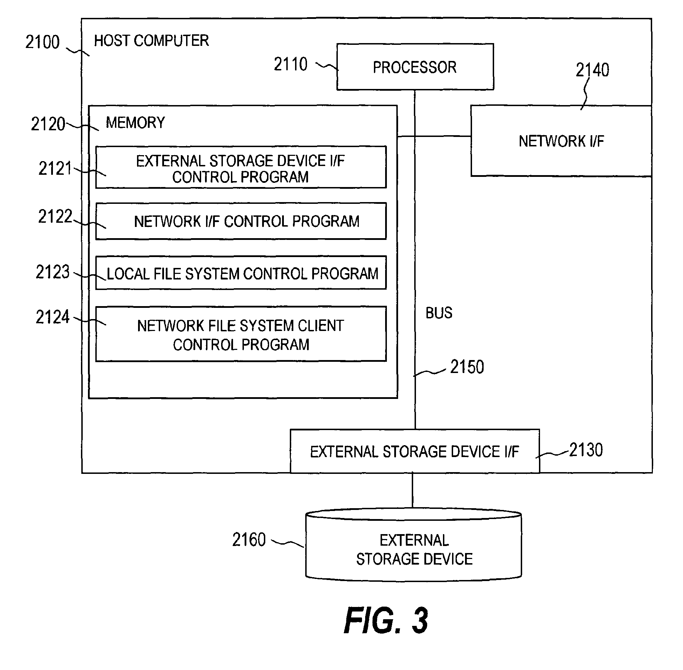

FIG. 3 is a block diagram showing an example of a configuration of a host computer 2100 according to the first embodiment of this invention.

The host computer 2100 includes a processor 2110, a memory 2120, an external storage device I/F 2130, and a network I/F 2140. The processor 2110, the memory 2120, the external storage device I/F 2130, and the network I/F 2140 are coupled with each other by a bus 2150.

The processor 2110 executes programs stored in the memory 2120. The memory 2120 temporarily store the programs executed by the processor 2110, and data required for the execution of these programs. The external storage device I/F 2130 is coupled to an external storage device 2160. The network I/F 2140 is coupled to other devices coupled via the network 100.

The memory 2120 stores an external storage device I/F control program 2121, a network I/F control program 2122, a local file system control program 2123, and a file replication control program 2124.

The external storage device I/F control program 2121 controls the external storage device I/F 2130. The network I/F control program 2122 controls the network I/F 2140. The local file system control program 2123 controls a file system used for managing data on the host computer 2100.

The network file system client control program 2124 is a client program used for using this storage system. The network file system client control program 2124 stores node identifiers of arbitrary storage nodes constituting this storage system in order to use this storage system. The host computer 2100 uses the identifier of the storage node to access the storage node of this storage node system. The identifier of a storage node may hold information on multiple storage nodes for increasing the availability.

The host computer 2200 has the same configuration, and hence description thereof is omitted.

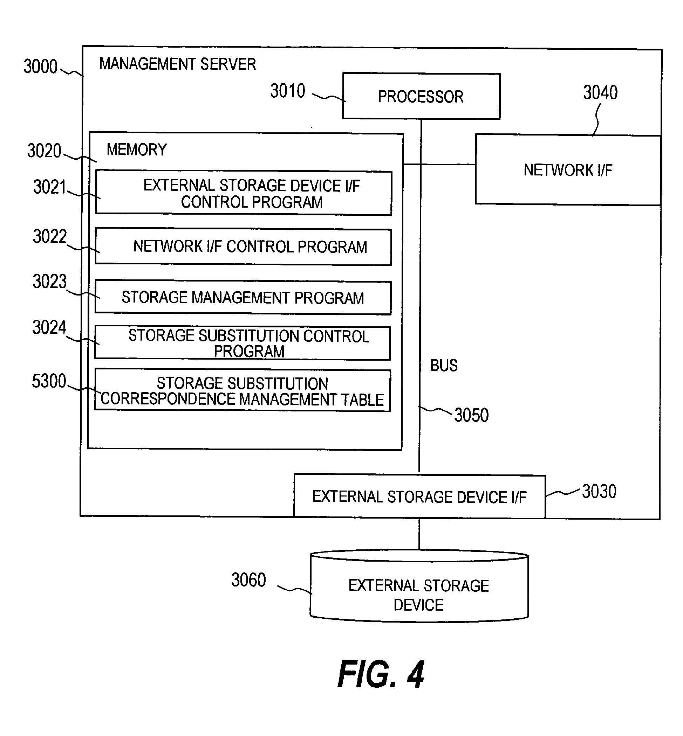

FIG. 4 is a block diagram showing an example of a configuration of a management server 3000 according to the first embodiment of this invention.

The management server 3000 includes a processor 3010, a memory 3020, an external storage device I/F 3030, and a network I/F 3040. The processor 3010, the memory 3020, the external storage device I/F 3030, and the network I/F 3040 are coupled with each other by a bus 3050.

The processor 3010 executes programs stored in the memory 3020. The memory 3020 temporarily store the programs executed by the processor 3010, and data required for the execution of these programs. The external storage device I/F 3030 is coupled to the external storage device 3060. The network I/F 3040 is coupled to other devices coupled via the network 100.

The memory 3020 stores an external storage device I/F control program 3021, a network I/F control program 3022, a storage management program 3023, a storage substitution control program 3024, and a storage substitution correspondence management table 5300.

The external storage device I/F control program 3021 controls the external storage device I/F 3030. The network I/F control program 3022 controls the network I/F 3040. The storage management program 3023 manages the storage node and the external storage device in this storage system.

The storage substitution control program 3024 issues a start request and an end request to a substitution destination storage node respectively for temporary substitution of reception of requests directed to another arbitrary storage node in this storage system. The storage substitution correspondence management table 5300 retains correspondences between a substitution source storage node and a substitution destination storage node. It should be noted that a description will later be given of the storage substitution correspondence management table 5300 with reference to FIG. 7.

FIG. 5 is a diagram showing an example of the substitution address information management table 5100 managed by the storage node 1100 according to the first embodiment of this invention.

The substitution address information management table 5100 manages information required for a storage node to substitute another storage node in the storage system in the reception of requests directed to this other storage node. The substitution address information management table 5100 includes substitution source address information 5110, temporary address information 5120, request source address information 5130, and operation types 5140.

The substitution source address information 5110 stores an identifier of a storage node which is substituted in the reception of requests by the own storage node. In FIG. 5, as an example of the identifier, IP addresses are stored. The substitution source address information 5110 may be any type of information as long as it can identify a subject storage node.

The temporary address information 5120 stores an identifier temporarily assigned to the substitution source storage node while the own storage node is substituting another storage node. The temporary address information 5120 may not always be assigned, and is assigned only if necessary. In FIG. 5, as an example of the identifier, an IP address is stored. The temporary address information 5120 may be any type of information as long as it can identify a subject storage node.

The request source address information 5130 is used to determine whether, the identifier of a request source device of this request coincides with the request source address information 5130 when a request directed to the substitution source storage node is received while the own storage node is substituting the substitution source storage node. If the identifier coincides with the request source address information 5130, a process is carried out according to a description of the operation type 5140

The operation type 5140 is a process carried out for substituting the substitution source storage node when a request directed to the substitution source storage node is received while the own storage node is substituting the substitution source storage node. Specifically, the operation types 5140 includes "TRANSFER", which transfers the request to the substitution source storage node, "TEMPORARILY STORE", which temporarily stores the requested content in the own storage node and transmits the requested content to the substitution source storage node after the substitution is finished, and "BLOCK", which blocks the request. For example, in FIG. 5, if the own storage node receives a process request directed to a storage node (substitution source storage node) with an identifier 192.168.10.100, and the identifier of the request source of this process request is 192.168.10.10, the request is transferred to the substitution source storage node. On this occasion, the request is transferred to the substitution source storage node by using the information registered to the temporary address information 5120.

When the substitution destination storage node receives a request directed to the substitution source storage node, entries registered in the substitution address information management table 5100 are searched from the first entry. If there is no entry which meets a condition, the search ends with error. Therefore, an entry which meets the condition must always exist in the substitution address information management table 5100. In the substitution address information management table 5100 shown in FIG. 5, as a last entry of a group of entries having the same identifier registered to the substitution source address information 5110, there must be an entry for which "Any" is specified as a request source address information 5130. This setting always provides an entry which meets a condition as long as a substitution source address information 5110 matches the entry.

FIG. 6 is a diagram showing an example of the temporarily stored request management table 5200 managed by the storage node 1100 in accordance with the first embodiment of this invention.

The temporarily stored request management table 5200, manages information required for temporarily storing a requested content in the request destination storage node when a substitution destination storage node substitutes a substitution source storage node in the reception of a request. The temporarily stored request management table 5200 includes request ID's 5210, request transfer destination address information 5220, requested content storage area top offsets 5230, and requested content sizes 5240.

The request ID 5210 is, an identifier assigned to a requested content for identification when a substitution destination storage node, receives a request directed to a substitution source storage node, and temporarily stores the request.

The request transfer destination address information 5220 stores an identifier of the storage node serving as a transfer destination of the requested content. In FIG. 6, as an example of the identifier, IP addresses are stored. The request transfer destination address information 5220 may be any type of information as long as it can identify a subject storage node.

The requested content storage area top offset 5230 stores top address information of an area storing the requested content. The requested content size 5240 stores the data length of the requested content.

When a substitution destination storage node has finished a reception of requests directed to a substitution source storage node, the substitution destination storage node, based on the information stored in the temporarily stored request management table 5200, can transfer temporarily stored requested contents to a storage node of the transfer destination.

FIG. 7 is a diagram showing an example of the storage substitution correspondence management table 5300 managed by the management server 3000 according to the first embodiment of this invention.

The storage substitution correspondence management table 5300, manages a correspondence between the substitution source storage node and the substitution destination storage node when the management server 3000 instructs storage nodes contained in the storage system to start the substitution of the reception of requests. The storage substitution correspondence management table 5300 includes substitution source address information 5310 and substitution destination address information 5320.

The substitution source address information 5310 stores an identifier of a substitution source storage node which is temporarily disabled to receive external process requests due to an maintenance operation or the like, and is thus substituted by another node in the reception of the process requests. The substitution destination address information 5320 stores an identifier of the substitution destination storage node which substitutes the substitution source storage node in the reception of the process requests.

When the management server 3000 instructs start of the substitution, the identifiers of a substitution source storage node and a substitution destination storage node are registered in the storage substitution correspondence management table 5300. Then, when the management server 3000 instructs finish of the substitution, the management server 3000 notifies the substitution destination storage node of registered contents, and requests the substitution destination storage node for execution of a substitution end process. When the substitution end instruction process has been completed, information registered to the corresponding entry in the storage substitution correspondence management table 5300 is released.

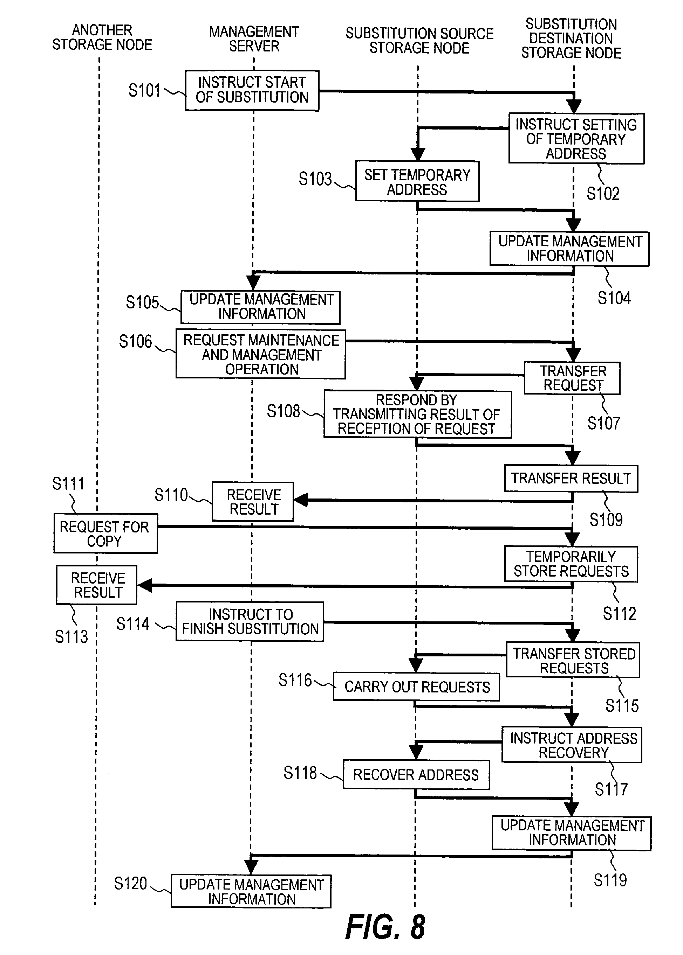

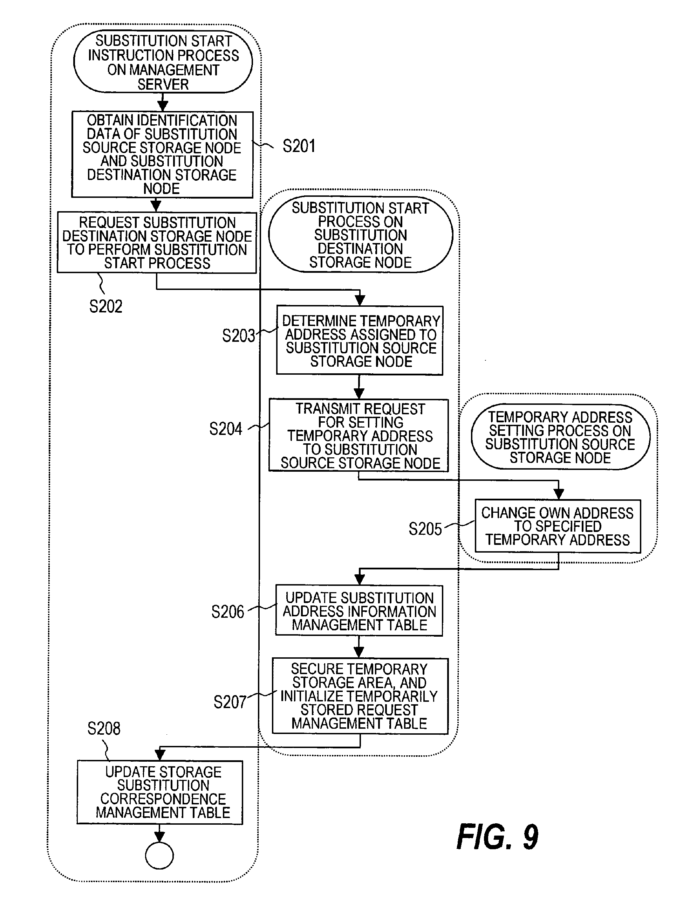

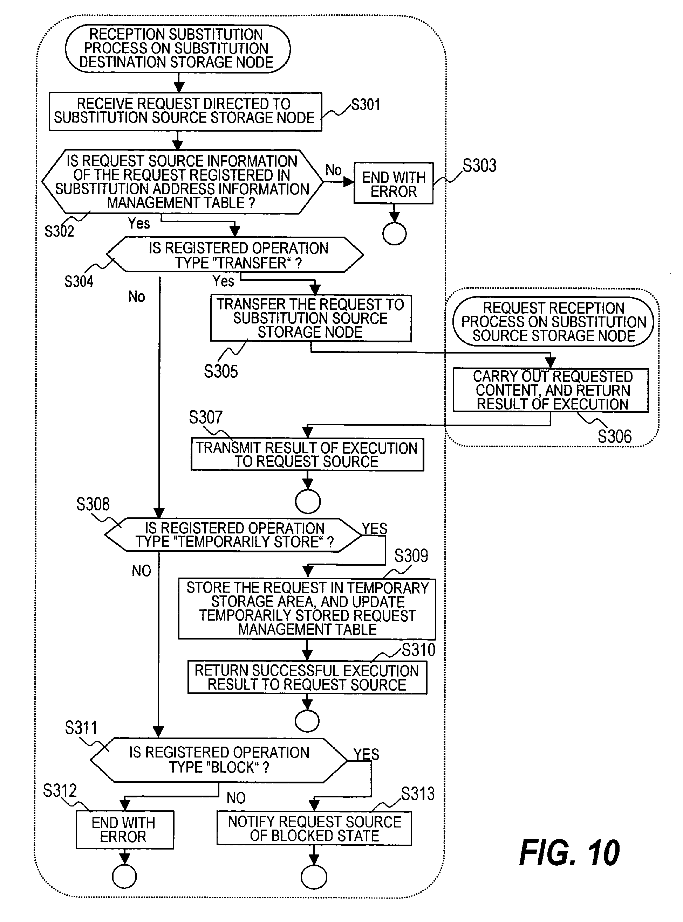

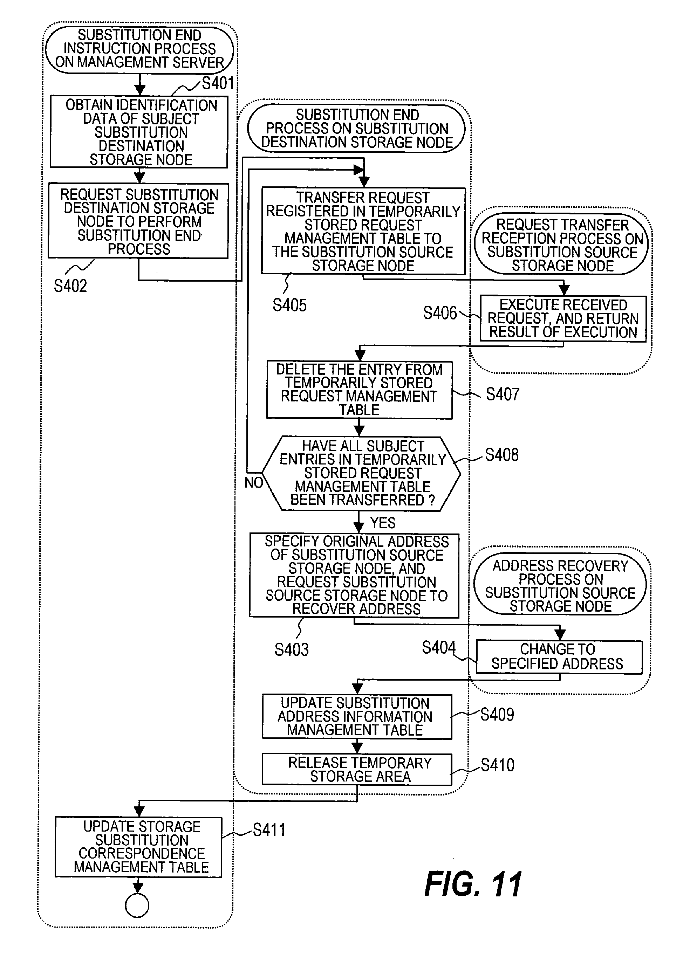

The description has been given of the configuration and the management information of the first embodiment of this invention. A description will now be given of processing steps of the first embodiment of this invention. The description will be given of an overview of a series of processes from the start of the substitution to the end of the substitution in FIG. 8, a substitution start instruction process in FIG. 9, a reception substitution process at a storage node in FIG. 10, and the substitution end instruction process in FIG. 11.

FIG. 8 is a sequence diagram showing a flow of a series of steps for substituting a storage node under a maintenance operation in reception of requested processes according to the first embodiment of this invention.

FIG. 8 shows steps carried out by the management server 3000 of instructing a start of the substitution of storage nodes, and an end of the substitution. Moreover, FIG. 8 shows steps carried out by the management server 3000 of requesting a substitution source storage node to execute the maintenance management operation, and steps carried out by another storage node of requesting the substitution source storage node to replicate a file. A description will now be given of the respective steps.

First, a description will be given of a flow of the substitution start instruction process. The management server 3000 specifies an identifier of the substitution source storage node, an identifier of a substitution destination storage node, request source address information upon the substituted reception, and operations during the substitution, and instructs the substitution destination storage node to start the substitution (S101).

When the substitution destination storage node is instructed to start the substitution, the substitution destination storage node determines a temporary address to be assigned to the substitution source storage node, and instructs the substitution source storage node to set the temporary address (S102).

When the substitution source storage node is instructed to set the temporary address, the substitution source storage node sets the temporary address (S103), and transmits the result of the process to the substitution destination storage node.

After receiving the result of the process, the substitution destination storage node registers the necessary information to the substitution address information management table 5100, thereby updating the management information required for receiving communication directed to the substitution source storage node (S104). After the update of the management information, the substitution destination storage node transmits the result of the process to the management server 3000.

The management server 3000 registers necessary information to the storage substitution correspondence management table 5300 of the own server, thereby updating management information (S105). The description has been given of the flow of the instruction of the start of the substitution.

A description will now be given of the steps by the management server 3000 of requesting the substitution source storage node for carrying out the maintenance and management operation. First, the management server 3000 issues a maintenance and management operation request in which the identifier of the substitution source storage node is specified (S106). The maintenance and management operation request is received by the substitution destination storage node.

The substitution destination storage node transfers the received maintenance and management operation request to the substitution source storage node based on the substitution address information management table 5100 (S107).

When the substitution source storage node receives the transferred maintenance and management operation request, the substitution source storage node carries out the requested process, and transmits a result of the process to the substitution destination storage node (S108).

The substitution destination storage node transmits the result of the process carried out by the substitution source storage node to the management server 3000, which is the source of the request (S109).

Finally, the management server 3000 receives the result of the process from the substitution destination storage node (S110). The description has been given of the flow of the maintenance and management operation request during the substitution.

A description will now be given of a flow of a process where an arbitrary storage node (another storage node) requests the substitution source storage node to replicate a file in the storage system according to the first embodiment of this invention. First, this other storage node requests the sbstitute source storage node to copy the file by specifying the identifier of the substitution source storage node (S111). The file copy request is received by the substitution destination storage node.

When the substitution destination storage node receives the copy request of the file, the substitution destination storage node temporarily stores a requested content on the own storage node based on the substitution address information management table 5100 (S112). Specifically, the substitution destination storage node stores the requested content in a temporary storage area of the own storage node, and registers necessary information to the temporarily stored request management table 5200. Then, the substitution destination storage node transmits the result of the process to this other storage node, which is the source of the request.

This other storage node, which is the source of the request, receives the result of the process from the substitution destination storage node (S113). The description has been given of the flow of the copy request during the substitution.

Finally, a description will be given of a flow of the substitution end instruction process.

First, the management server 3000 specifies the identifier of the substitution source storage node and the identifier of the substitution destination storage node as the information corresponding to the one entry registered to the storage substitution correspondence management table 5300, and instructs the substitution destination storage node to finish the substitution (S114).

When the substitution destination storage node is instructed by the management server 3000 to finish the substitution, the substitution destination storage node transfers the requested content registered to the temporarily stored request management table 5200 to the substitution source storage node (S115).

When the substitution source storage node receives the request transferred from the substitution destination storage node, the substitution source storage node executes the request (S116), and transmits the result of the process to the substitution destination storage node.

When the substitution destination storage node receives the result of the processes from the substitution source storage node, the substitution destination storage node instructs the substitution source storage node to recover the setting to the address before the change based on the information registered to the substitution address information management table 5100 (S117).

When the substitution source storage node is instructed to recover the address, the substitution source storage node sets the specified address to the own storage node, thereby recovering the address before the change (S118). Then, the substitution source storage node transmits the result of the process to the substitution destination storage node.

When the substitution destination storage node receives the result of the process from the substitution source storage node, the substitution destination storage node deletes the information on the substitution source storage node the substitution for which has been finished from the substitution address information management table 5100, and updates the management information so as not to receive communication to the substitution source storage node (S119). After the update of the management information, the substitution destination storage node transmits the result of the process to the management server 3000.

The management server 3000 deletes the entry corresponding to the substitution end instruction registered in the storage substitution correspondence management table 5300, thereby updating the management information (S120). The description has been given of the flow of the substitution end instruction process.

FIG. 9 is a flowchart showing steps for instructing by the management server 3000 to the storage system to start substitution according to the first embodiment of this invention.

This process is carried out by the storage substitution control program 3024 on the management server 3000.

First, the processor 3010 of the management server 3000 obtains identifiers of a substitution source storage node and a substitution destination storage node (S201). The identifiers of the storage nodes may be obtained by receiving an input from an administrator using an input device such as a keyboard of the management server 3000, or by selecting from a list of storage nodes managed by the storage management program 3023. Moreover, the process in the step S201 obtains information on request source address information 5130 and corresponding operation types 5140 required for registration to the substitution address information management table 5100 stored in the substitution destination storage node.

Then, the processor 3010 of the management server 3000 requests the substitution destination storage node whose identifier is obtained in the process in the step S201 to execute the substitution start process (S202).

When the processor 2110 of the substitution destination storage node receives the request for execution of the substitutions start process, the processor 2110 executes the substitution start control subprogram 1126. First, the processor 2110 of the substitution destination storage node determines a temporary address to be assigned to the specified substitution source storage node (S203). It should be noted that, if it is not necessary to assign a temporary address to the substitution source storage node, a temporary address is not determined by the process in the step S203.

Then, the processor 2110 of the substitution destination storage node transmits a request for setting the temporary address to the substitution source storage node (S204).

When the processor 2110 of the substitution source storage node receives the request for setting the temporary address, the processor 2110 executes the substitution start control subprogram 1126 to change its own address to the specified temporary address (S205). Then, the processor 2110 transmits a result of the process to the substitution destination storage node, which is the source of the request. Specifically, the network I/F control program 1122 is executed on the substitution source storage node, thereby changing the identifier on the network assigned to the substitution source storage node.

When the processor 2110 of the substitution destination storage node receives the result of the process from the substitution source storage node, the processor 2110 updates the substitution address information management table 5100 managed by the own storage node based on the information set by the process in the step S201 (S206). Specifically, the processor 2110 of the substitution destination storage node registers entries including the substitution source address information 5110, the temporary address information 5120, the request source address information 5130, and the operation types 5140 in the substitution address information management table 5100 if necessary. Moreover, the processor 2110 of the substitution destination storage node takes over the address information (IP address) of the substitution source storage node in order to receive processes which the substitution source storage node is requested to carry out.

When the processor 2110 of the substitution destination storage node receives a process which the substitution source storage node is requested to carry out, the processor 2110 of the substitution destination storage node secures a temporary storage area for temporarily storing a content of the request. Moreover, the processor 2110 secures an area for the temporarily stored request management table 5200 to manage this area, and initialize the contents (S207). When the processor 2110 of the substitution destination storage node has completed the above process, the processor 2110 transmits the result of the process to the management server 3000, which is the source of the request.

When the management server 3000 receives the result of the process from the substitution destination storage node, the management server 3000 updates the information in the storage substitution correspondence management table 5300 (S208). Specifically, the management server 3000 registers an entry including the substitution source address information 5310 and the substitution destination address information 5320, in the storage substitution correspondence management table 5300.

FIG. 10 is a flowchart showing steps of the reception substitution process at a substitution destination storage node according to the first embodiment of this invention.

This process is carried out by processing the request reception control subprogram 1127 in the substitution destination storage node. Moreover, upon the start of the substitution, the substitution destination storage node is in a state where the identifier of a substitution source storage node on the network has already been set. Thus, all the requests directed to the substitution source storage node can be received by the substitution destination storage node.

The processor 2110 of the substitution destination storage node receives a request directed to the substitution source storage node (S301). Then, the processor 2110 of the substitution destination storage node determines whether the address information on a request source is registered as request source address information 5130 in the substitution address information management table 5100 (S302). In the process in the step S302, the processor 2110 of the substitution destination storage node continues search for a group of entries of the corresponding substitution source address information 5110 from the beginning until the corresponding address information is obtained.

If the address information on the request source is not registered ("NO" in the step S302), though the substitution destination storage node is set for the reception as the substitute, an operation type is not specified upon the substituted reception. Therefore, the processor 2110 of the substitution destination storage node finishes in error (S303).

If the address information on the request source is registered ("YES" in the step S302), the processor 2110 of the substitution destination storage node obtains operation type 5140 of this entry, and determines whether the value thereof is "TRANSFER" or not (S304). If the value of the operation type 5140 is "TRANSFER" ("YES" in the step S304), the processor 2110 of the substitution destination storage node transfers this request to the request source (S305). On this occasion, in order to transfer the request to the request source, the processor 2110 of the substitution destination storage node uses the temporary address information 5120 registered in the substitution address information management table 5100.

The processor 2110 of the substitution source storage node carries out the received requested content, and transmits the result of the execution to the substitution destination storage node (S306). When the substitution destination storage node receives the result of the execution, the substitution destination storage node transmits the result of the execution to the request source (S307), and finishes this process.

On the other hand, if the value of the operation type 5140 of this entry is not "TRANSFER" ("NO" in the step S304), the processor 2110 of the substitution destination storage node determines whether the value of the operation type 5140 is "TEMPORARILY STORE" or not (S308).

If the value of the operation type 5140 is "TEMPORARILY STORE" ("YES" in the step S308), the processor 2110 of the substitution destination storage node stores the request in a temporary storage area of its own storage node, and updates the temporarily stored request management table 5200 (S309).

Specifically, the processor 2110 of the substitution destination storage node registers the top offset and the size of the area at the occasion when the requested content is stored in the temporary storage area, to a requested content storage area top offsets 5230 and to a requested content sizes 5240 of the temporarily stored request management table 5200. A request ID 5210 is properly set upon the temporary storage. The identifier of the substitution source storage node is registered in the request transfer destination address information 5220.

When the processor 2110 of the substitution destination storage node finishes the process in the step S309, the processor 2110 transmits a result of the execution to the request source (S310), and finishes this process.

Further, if the value of the operation type 5140 of this entry is not "TEMPORARILY STORE" ("NO" in the step S308), the processor 2110 of the substitution destination storage node determines whether the value of the operation type 5140 is "BLOCK" or not (S311). If the value of the operation type 5140 is not "BLOCK" ("NO" in the step S311), the processor 2110 of the substitution destination storage node determines that a valid content is not registered in the operation type 5140, and finishes this process in error (S312).

If the value of the operation type 5140 is "BLOCK" ("YES" in the step S311), the processor 2110 of the substitution destination storage notifies the request source of the fact that the request to the specified storage node is blocked (S313), and finishes this process.

FIG. 11 is a flowchart showing steps for instructing by the management server 3000 to the storage system to finish the substitution according to the first embodiment of this invention.

The processor 3010 of the management server 3000 executes the storage substitution control program 3024, and obtains the identifier of a substitution destination storage node subject to the end of the substitution (S401). The identifier of the storage node may be obtained by receiving an input from the administrator using an input device such as the keyboard of the management server 3000, or by selecting from the list of the substitution destination storage nodes managed by the storage substitution correspondence management table 5300.

Then, the processor 3010 of the management server 3000 requests the substitution destination storage node whose identifier is obtained in the process in the step S401 to execute the substitution end process (S402).

When the processor 2110 of the substitution destination storage node receives the request for execution of the substitution end process, the processor 2110 executes the substitution end control subprogram 1128.

First, the processor 2110 of the substitution destination storage node transfers one or more requests registered to the temporarily stored request management table 5200 to a substitution source storage node (S405). If there are multiple requests subject to the transfer, the processor 2110 may transfer the requests to a substitution source storage node multiple times.

The processor 2110 of the substitution source storage node executes the substitution end control subprogram 1128, properly executes the request received from the substitution destination storage node, and transmits the result of the execution to the substitution destination storage node (S406).

When the processor 2110 of the substitution destination storage node receives the result of the execution, the processor 2110 deletes the processed entries from the temporarily stored request management table 5200 (S407). Further, the processor 2110 determines whether all the subject entries in the temporarily stored request management table 5200 have been processed (S408). If all the subject entries have not been processed ("NO" in the step S408), the processes from the step S405 to the step S408 are repeated for the unprocessed entries.

When the processor 2110 of the substitution destination storage node has transferred the temporarily stored requests to the substitution source storage node, the processor 2110 requests the substitution source storage node to recover the address (S403). Specifically, the processor 2110 obtains address information which is originally assigned to the substitution source storage node, and is currently registered to substitution source address information 5110 of the substitution address information management table 5100, and requests the substitution source storage node to recover the obtained original address.

When the processor 2110 of the substitution source storage node receives the address recovery request, the processor 2110 changes its own address to the specified address (S404), and transmits the result of the process to the substitution destination storage node. Specifically, the network I/F control program 1122 is executed on the substitution source storage node, thereby changing the identifier on the network assigned to the substitution source storage node.

After the above process has been completed, the processor 2110 of the substitution destination storage node updates the substitution address information management table 5100 on its own storage node (S409). Specifically, the processor 2110 deletes all the entries relating to the substitution source storage node, and are registered to the substitution address information management table 5100.

Then, the processor 2110 of the substitution destination storage node releases the temporary storage areas secured by the substitution destination storage node (S410), and transmits the result of the process to the management server 3000.

When the management server 3000 receives the result of the process from the substitution destination storage node, the management server 3000 updates the storage substitution correspondence management table 5300 (S411), and finishes this process. Specifically, the management server 3000 deletes entries corresponding to the substitution source storage node and to the substitution destination storage node, both of which have carried out the substitution completed by this process, from the storage substitution correspondence management table 5300.

According to the first embodiment of this invention, by causing another storage node to substitutionally receive a process request directed to a storage node under a maintenance operation, it is possible to make a waiting time of a device of a request source short. Specifically, it is possible to eliminate the necessity for waiting for a response to a request directed to a storage node under a maintenance operation until time out occurs or eliminate the necessity of retries.

Moreover, according to the first embodiment of this invention, when a certain device such as the management server requests a storage node to carry out a maintenance and management operation, it is possible to transfer the request to the storage node subject to the maintenance. Therefore, even when another storage node is receiving requests from other devices as a substitute, it is not necessary to change the setting of the certain device such as the management server, and the certain device can continue to request the storage node subject to the maintenance to carry out a maintenance and management operation.

As a variation of the first embodiment of this invention, when a substitution source storage node stops receiving processes due to a maintenance operation or the like, the substitution source storage node may specify a substitution destination storage node. Specifically, a substitution destination storage node is assigned to respective storage nodes in advance. When a maintenance operation starts, the substitution destination storage node is requested to carry out the substitution start process. When the maintenance operation is finished, and when the substitution source storage node resumes the reception of processes, the substitution source storage node may request the substitution destination storage node to execute the substitution end process.

### [Second Embodiment]

According to the first embodiment, the description is given of the case where a process, which a storage node under a maintenance operation is requested to carry out, is received by a substitution destination storage node. According to a second embodiment, a description will be given of a case where the substitution destination storage node is further substituted due to a maintenance operation or the like, and the relationship between the substitution source and the substitution destination is thus nested. A description will now be given of configurations and processing steps different from those of the first embodiment, and a description of configurations and processing steps corresponding to those of the first embodiment is thus properly omitted.

According to the second embodiment of this invention, in order to handle the case where the relationship between the substitution source and the substitution destination is nested, the following processes are added to the substitution start process and the substitution end process.

First, in the substitution start process, a storage node, which is to be a new substitution source, causes a new substitution destination storage node to take over the contents of the substitution address information management table 5100, which has been managed to receive requests as the substitution destination. As a result, the new substitution destination storage node, as a substitute, can receive requests directed to the two substitution source storage nodes.

Then, in the substitution end process, when the address originally assigned to the substitution source storage node is recovered, the contents of the substitution address information management table 5100 which have been taken over by the substitution start process are returned to the substitution source storage node. In this way, after the substitution is finished, the substitution relationship set before the substitution can be recovered. After the substitution is finished, and the previous substitution relationship has been recovered, the storage node, which was the substitution destination before the substitution, comes to receive, as a substitute, requests as the substitution destination storage node for the original substitution source storage node.

It should be noted that it is not necessary to take over and to recover a set of requested contents temporarily stored in the substitution destination storage node, and the request management table 5200 used to manage the set of requested contents. This is because, when the relationship between the substitution source and the substitution destination is finished, the substitution destination storage node reflects the temporarily stored requested contents to the substitution source storage node. Therefore, even when the substitution relationship is nested, it is not necessary to transfer temporarily stored requested contents.

In order to handle the case as described above where the relationship between the substitution source and the substitution destination is nested, it is necessary to change some parts of the substitution address information management table 5100, the substitution start process, and the substitution end process. A description will now be given respectively of these changes.

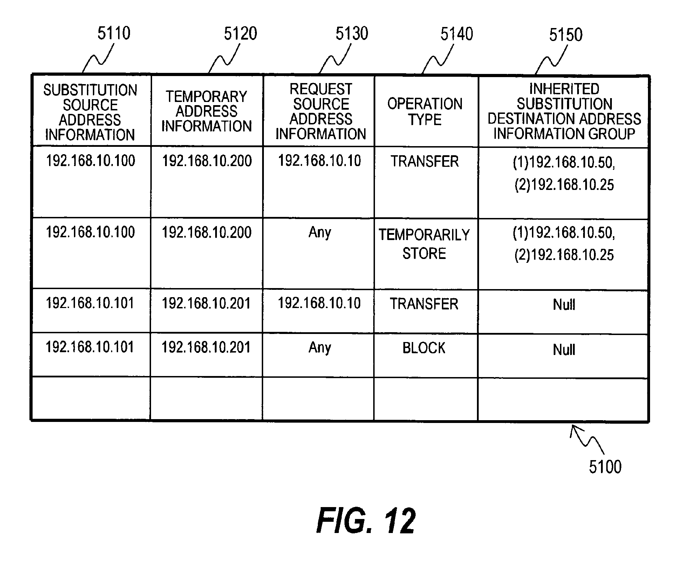

FIG. 12 is a diagram showing an example of the substitution address management table 5100 managed by the storage node 1100 according to the second embodiment of this invention.

The substitution address information management table 5100 according to the second embodiment of this invention is obtained by newly adding an inherited substitution destination address information group 5150, which is used to identify relationships between storage nodes in a nesting case, to the substitution address information management table 5100 according to the first embodiment.

If a new substitution source storage node has been a substitution destination storage node, an inherited substitution destination address information group 5150 is set to take over contents of the substitution address information management table 5100 to a new substitution destination storage node. The information to be set is the identifier of the storage node which is the new substitution source storage node, and which has been the substitution destination storage node of another storage node.

Specifically, to the inherited substitution destination address information group 5150 in the substitution address information management table 5100 shown in FIG. 12, "(1)192.168.10.50, (2) 192.168.10.25" are registered. The value set to the inherited substitution destination address information group 5150 indicates that the new substitution source storage node has originally been a substitution destination storage node of a storage node identified by the identifier "192.168.10.25". Further, the storage node identified by the identifier "192.168.10.25" was a substitution destination storage node of a storage node identified by the identifier "192.168.10.50".

On this occasion, when the substitution relationship between the substitution destination storage node and the storage node identified by the identifier "192.168.10.25" is finished, the information registered to this entry is transmitted to the storage node identified by the identifier "192.168.10.25", and the storage node identified by the identifier "192.168.10.25" becomes a new substitution destination storage node. Subsequently, each time a substitution relationship is finished, the contents of the substitution address information management table 5100, which has been inherited by the substitution destination storage node, are returned to the substitution source storage node.

It should be noted that an entry whose content of the inherited substitution destination address group 5150 is "Null" indicates that the substitution relationship is not nested.

By configuring the substitution address information management table 5100 as described above, according to the second embodiment of this invention, even if the nesting is formed on multiple stages, the substitution can be inherited.

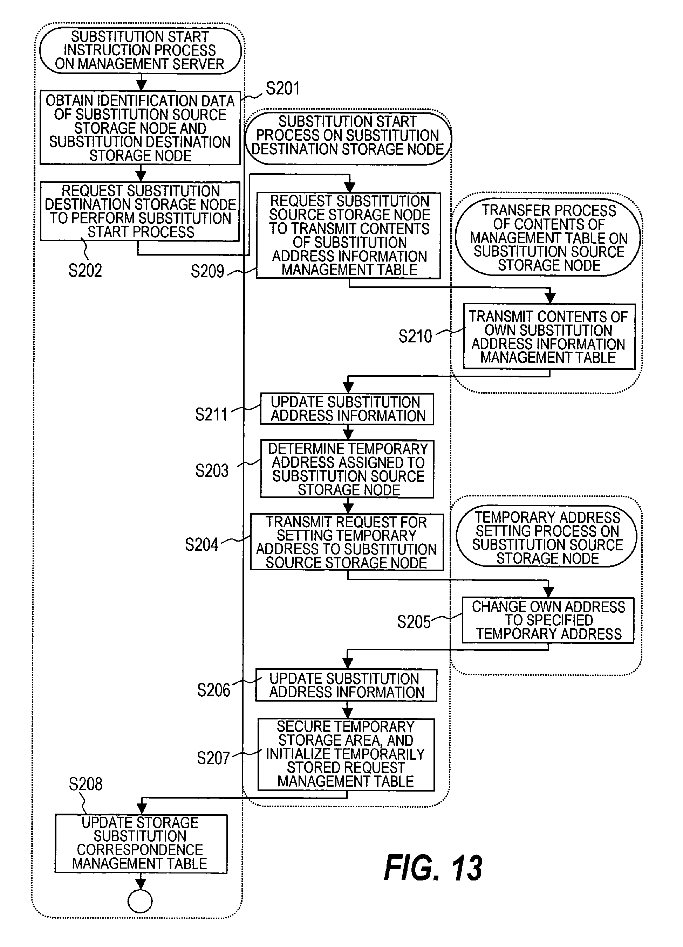

FIG. 13 is a flowchart showing steps for instructing by the management server 3000 to the storage system to start the substitution according to the second embodiment of this invention.

According to the second embodiment of this invention, before the process where the temporary address to be assigned to the substitution source storage node is determined on the substitution destination storage node (S203), the following processes are carried out. It should be noted that, except for the newly added processes, the processes in FIG. 13 are the same as those of the first embodiment shown in FIG. 9.

When the processor 2110 of the substitution destination storage node receives the request to execute the substitutions start process, the processor 2110 requests the substitution source storage node to transmit the contents of the substitution address information management table 5100 to the substitution destination storage node (S209).

The substitution source storage node transmits the contents of the substitution address information management table 5100 to the substitution destination storage node (S210). If the substitution source storage node does not have information in the substitution address information management table 5100, that is, the substitution source storage node has not been a substitution destination storage node of another storage node, the substitution source storage node notifies this state.

When the substitution destination storage node receives the contents of the substitution address information management table 5100 of the substitution source storage node, the substitution destination storage node registers the received contents to the substitution address information management table 5100 of its own storage node. Specifically, the substitution destination storage node registers the own identifier to the inherited substitution destination address information group 5150 of entries thereof.

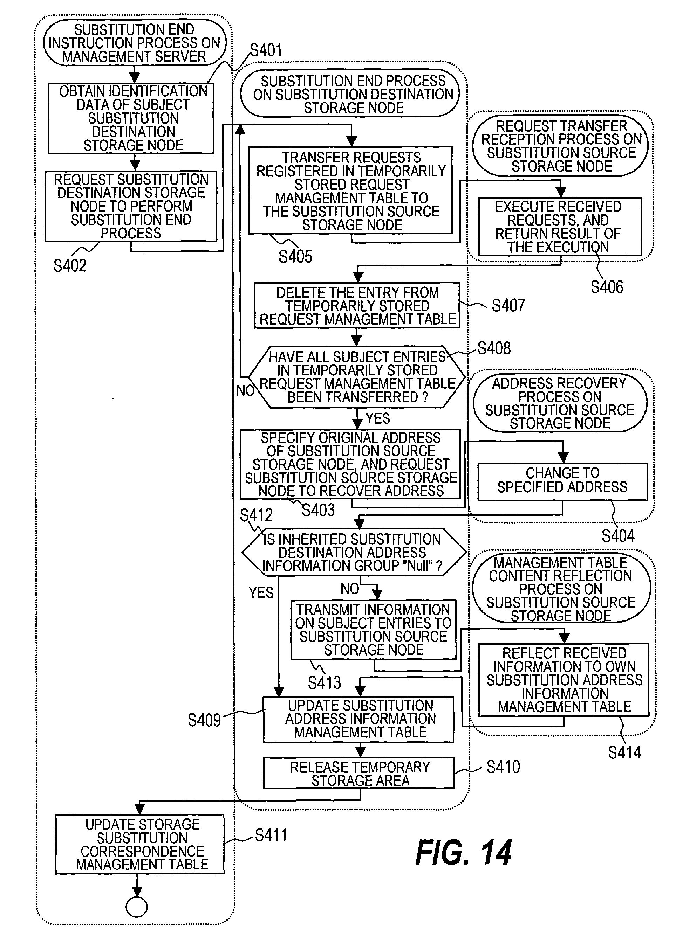

FIG. 14 is a flowchart showing steps for instructing by the management server 3000 to the storage system to finish the substitution according to the second embodiment of this invention.

According to the second embodiment of this invention, before the process of updating the substitution address information management table 5100 on the substitution destination storage node (S409), the following processes are carried out. It should be noted that, except for the newly added processes, the processes in FIG. 14 are the same as those of the first embodiment shown in FIG. 11.

The processor 2110 of the substitution destination storage node determines whether the value of inherited substitution destination address information group 5150 of subject entries of the substitution address information management table 5100 is "Null" or not (S412). If the value of the inherited substitution destination address information group 5150 is "Null" ("YES" in the step S412), that is, the subject entries are not inherited from another storage node, the processor 2110 updates the substitution address information management table 5100 (S409).

On the other hand, if the value of the inherited substitution destination address information group 5150 is not "Null" ("NO" in the step S412), that is, the substitution source storage node is a substitution destination storage node of another storage node, the processor 2110 of the substitution destination storage node transmits information on the subject entries to the substitution source storage node (S413).

The processor 2110 of the substitution source storage node reflects the information received from the substitution destination storage node to the substitution address information management table 5100 (S414), and transmits the result of the process to the substitution destination storage node, which is the request source.

When the processor 2110 of the substitution destination storage node receives the result of the process from the substitution source storage node, the processor 2110 executes the processes of the step S409 and the following steps.

According to the second embodiment of this invention, even when a storage node which is a substitution destination of another storage node stops receiving processes due to a maintenance operation or the like, yet another storage node as a substitute receives the processes, thereby providing effects similar to those of the first embodiment.

### [Third Embodiment]

According to the first embodiment of this invention, the description is given of the case where a process, which a storage node under a maintenance operation is requested to carry out, is received by one substitution destination storage node. According to a third embodiment of this invention, a description will be given of a case where multiple storage nodes receive requests in a distributed manner in order to distribute a load due to the substitution. A description will now be given of configurations and processing steps different from those of the first embodiment of this invention, and a description of configurations and processing steps corresponding to those of the first embodiment is thus properly omitted.

First, in order to associate multiple substitution destination storage nodes with a single substitution source storage node, a name server 4000 is newly added in the computer system according to the third embodiment of this invention.

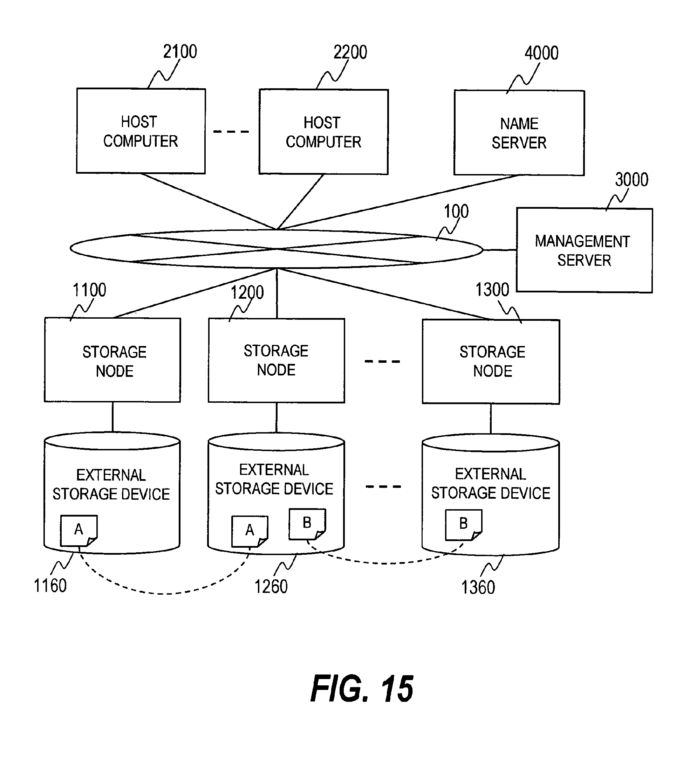

FIG. 15 is a block diagram showing an example of a configuration of the computer system according to the third embodiment of this invention.

As described above, the difference between the first embodiment shown in FIG. 1 and the third embodiment is that the name server 4000 is added.

The name server 4000 provides the devices coupled to the network with a conversion function between an identifier as a string typified by a host name and an identifier as a number typified by an IP address.

According to the third embodiment of this invention, a subject storage node is accessed not by directly specifying an IP address of a substitution destination storage node, but by specifying a host name.

The name server 4000 registers IP addresses of multiple substitution destination storage nodes to a host name corresponding to the substitution destination storage nodes. Then, when the name server 4000 receives a request for converting an identifier specifying the host name corresponding to the substitution destination storage nodes, the name server 4000 transmits an IP address selected at random (or in an ascending order in terms of the number of substitutions) from the multiple registered IP addresses. In this way, it is possible to use multiple storage nodes as a substitution destination.

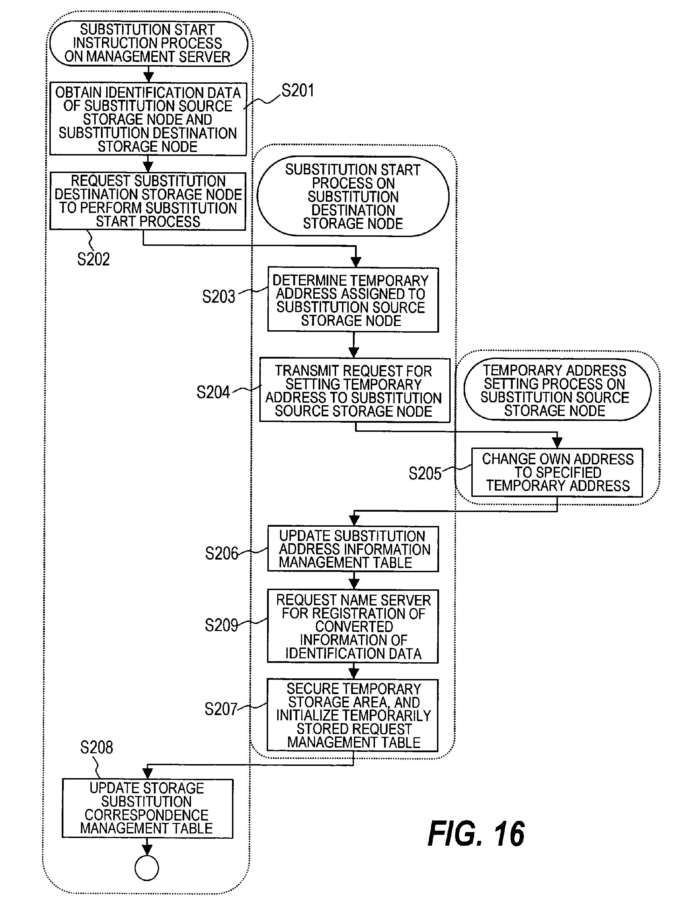

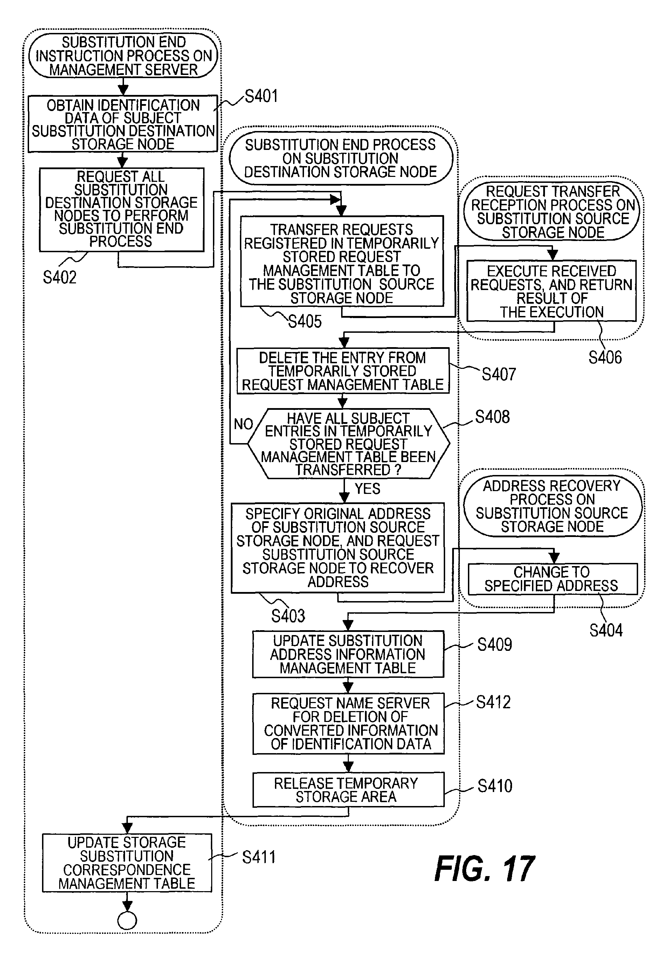

Moreover, in order to specify multiple substitution destination storage nodes, it is necessary to change some parts of the substitution start process and the substitution end process. Referring to FIGS. 16 and 17, a description will now be given of the changes.

FIG. 16 is a flowchart showing steps for instructing by the management server 3000 to the storage system to start the substitution according to the third embodiment of this invention.

The substitution start instruction process according to the third embodiment of this invention is different from that of the first embodiment in two points.

A first point is that, in the process of the step S202, when the processor 3010 of the management server 3000 requests the substitution destination storage node to execute the substitution start process, the processor 3010 requests multiple storage nodes to execute this process.

A second point is that, on the substitution destination storage node, after the process of updating the substitution address information management table 5100 (S206), a process of requesting the name server 4000 to register the converted information of the identifier of the substitution destination storage node (S209) is added. Specifically, the IP address of the substitution destination storage node is associated with the host name of the substitution destination storage node, thereby enabling the conversion from the host name to the IP address in the name server 4000.

FIG. 17 is a flowchart showing steps for instructing by the management server 3000 to the storage system to finish the substitution according to the third embodiment of this invention.

The substitution end instruction process according to the third embodiment of this invention is different from that of the first embodiment in two points.

A first point is that, in the process of the step S402, when the management server 3000 requests the substitution destination storage node to execute the substitution end process, the process needs to be changed to request multiple storage nodes.

A second point is that, in the substitution destination storage node, after the process of updating the substitution address information management table 5100 (S409), a process of requesting the name server 4000 to delete the converted information of the identifier of the substitution destination storage node (S412) is added. Specifically, the IP address of the substitution destination storage node is disassociated with the host name of the substitution destination storage node, thereby disabling the conversion from the host name to the IP address in the name server 4000.

In order to realize multiple substitution destination storage nodes as shown in the third embodiment of this invention, when another storage node, the host computer, or the management server 3000 accesses a storage node, the name server 4000 is requested to execute the conversion from a host name to an IP address, and, then, the access is made to the subject storage node. Once the host name is converted to the IP address, the storage node may be accessed by directly using this IP address.

According to the third embodiment of this invention, in addition to the effects of the first embodiment of this invention, since the name server 4000 selects a substitution destination storage node at random (or in an ascending order in terms of the number of substitutions), it is possible to prevent a load from concentrating on a specific storage node, and thus to distribute the load.

Finally, this invention may be configured as a control device, a control system, or a control method. Moreover, this invention may be realized in various forms such as a computer program for realizing a control device, a recording medium with this program installed, and a data signal containing this program and realized in a carrier wave.

When this invention is configured as a computer program, a recording medium with this program installed, or the like, the computer program, the recording medium, or the like may be configured as a control device or an entire program for controlling a control device, or may be configured as only a part thereof. Moreover, as the recording medium, various computer readable volatile or non-volatile recording medium such as a flexible disk, a CD-ROM, a DVD-ROM, a punch card, a printed matter on which codes such as barcodes are printed, and an internal storage device or external storage device of a computer may be used.

While the present invention has been described in detail and pictorially in the accompanying drawings, the present invention is not limited to such detail but covers various obvious modifications and equivalent arrangements, which fall within the purview of the appended claims.

## Claims

1. A computer system comprising:
a storage system for storing data; and
a management server coupled to the storage system, wherein:
the storage system comprises a first interface coupled to the management server, a first processor coupled to the first interface, and a first memory coupled to the first processor;
the management server comprises a second interface coupled to the storage system, a second processor coupled to the second interface, and a second memory coupled to the second processor;
in the case of which a first storage system stops receiving a process request, the management server selects a second storage system which receives a process request directed to the first storage system in place of the first storage system to be stopped; and
the second storage system is configured to:
instruct the first storage system to change an identifier of the first storage system; and
receive a process request directed to the first storage system by assigning the identifier of the first storage system before the change to the second storage system.

2. The computer system according to claim 1, wherein:
the storage system requests another storage system for creation of a copy of data stored in the storage system; and
the process request is a creation request for a copy of the data.

3. The computer system according to claim 2, wherein the second storage system is further configured to store a copy of the data based on the request for creation a copy of the data in the case of which the second storage system receives the request for creation a copy of the data transmitted to the first storage system.

4. The computer system according to any one of claims 1-3, wherein the second storage system is further configured to transmit the process request, which is received by the second storage system in place of the first storage system, to the first storage system in the case of which the first storage system resumes the reception of a process request.

5. The computer system according to any one of claims 1-4, wherein:
the process request includes an identifier of a device which transmits the process request; and
the second storage system is further configured to determine whether to transmit the process request to the first storage system based on the identifier of the device which has transmitted the process request.

6. The computer system according to claim 5, wherein the second storage system is further configured to transfer the process request transmitted from the management server to the first storage system in the case of which it is judged that the device which transmits the process request is the management server.

7. The computer system according to any one of claims 1-6, wherein:
in the case of which the second storage system stops receiving a process request, the management server selects another second storage system; and
the newly selected second storage system receives process requests directed to the first storage system and the old second storage system, which has stopped receiving a process request.

8. The computer system according to any one of claims 1-7, further comprising an identifier conversion module for managing a correspondence between storage systems, wherein:
the management server is configured to select a plurality of second storage systems for the first storage system;
the identifier conversion module is configured to:
store a correspondence between the first storage system and the respective selected second storage systems; and
select, in the case of which a process directed to the first storage system is requested, a second storage system corresponding to the first storage system to which the process request is directed; and
the selected second storage system is configured to receive the process request directed to the first storage system.

9. A storage system for storing data written and read by a host computer, comprising:
an interface coupled to the host computer;
a processor coupled to the interface; and
a memory coupled to the processor, wherein:
the storage system is configured to:
instruct, in the case of which the storage system receives a process request directed to another storage system which is to be changed over in place of the another storage system, the another storage system to change an identifier of the another storage system; and
receive a process request directed to the another storage system by assigning the identifier of the another storage system before the change to the storage system.

10. The storage system according to claim 9, wherein the storage system is further configured to store the data according to the process request in the case of which the process request directed to the another storage system is a request for storage of data,.

11. The storage system according to claim 9 or claim 10, wherein the storage system is further configured to transmit the process request, which is directed to the another storage system and is received by the storage system in place of the another storage system, to the another storage system in the case of which the another storage system resumes the reception of a process request.

12. The storage system according to any one of claims 9-11, wherein:
the process request includes an identifier of a device which transmits the process request; and
the storage system is further configured to determine whether to transmit the process request to the another storage system based on the identifier of the device which has transmitted the process request.

13. The storage system according to claim 12, wherein the storage system is further configured to transfer the process request transmitted from the management server to the another storage system in the case of which it is judged that the device which has transmitted the process request is a management server managing the storage system.

14. The storage system according to any one of claims 9-13, wherein in the case of which the another storage system is receiving a process request directed to a third storage system in place of the third storage system, the storage system receives process requests directed to the another storage system and the third storage system.

15. A method performed in a computer system including a storage system for storing data and a management server coupled to the storage system, for substituting a process directed to the storage system when the storage system stops receiving a process request,
the storage system comprising a first interface coupled to the management server, a first processor coupled to the first interface, and a first memory coupled to the first processor,
the management server comprising a second interface coupled to the storage system, a second processor coupled to the second interface, and a second memory coupled to the second processor,
the method comprising the steps of:
selecting, by the management server, in the case of which a first storage system stops receiving a process request, a second storage system which receives the process request directed to the first storage system in place of the first storage system to be stopped;
instructing, by the second storage system, the first storage system to change an identifier of the first storage system; and
receiving, by the second storage system, a process request directed to the first storage system by assigning the identifier of the first storage system before the change to the second storage system.
